# EUROPEAN PATENT APPLICATION

(11) **EP 2 139 217 A1**
(43) Date of publication of application: **30.12.2009**
(21) Application number: 09011275.6
(22) Date of filing: 14.02.2002
(51) Int. Cl.: H04M 15/00, H04M 17/00

(54) **Network dependent selection of user identification in a mobile telecommunications system**

(30) Priority: 16.02.2001 GB 0103918
(62) Divisional of application: 02711084.0
(71) Applicant: Interoute Communications Limited, London E14 9SG (GB)
(72) Inventor: De Beer, Leon, Berkshire RG14 7RG (GB)
(74) Representative: Beresford, Keith Denis Lewis

(57) **Abstract**

A method of operating a mobile telecommunications apparatus (1) in a telecommunications system is disclosed wherein the apparatus comprises means for making telephone calls via the system and subscriber identity data stored in a first memory (200) of the apparatus is used to associate telephone calls from the apparatus with a respective subscriber account, a set of subscriber identifiers being associated with the same account for use as the subscriber identity data, the method comprising:
obtaining (171) a network identifier from a network with which the apparatus is registered;
determining (172) which one of the set of subscriber identifiers is preferred for use as the subscriber identity data when the apparatus is registered to the network identified by the network identifier; and, if different from the subscriber identity data;
replacing (175) the subscriber identity data stored in the first memory with the preferred subscriber identifier.

## Description

This invention relates the operation of mobile stations in cellular telecommunications systems and in particular, but not exclusively, to the updating of information stored in memory within mobile telephones for the purpose of least cost routing.

It is known from WO99/04578 and WO00/41486 to provide least cost routing of telephone calls made from mobile stations via a cellular network such that, when a user enters a destination call number, an application of the mobile station is called to refer to a lookup table to retrieve stored data which enables the mobile station to perform least cost routing. The stored data is updated by broadcasting of messages from a control centre when appropriate, for example to reflect changes in call charges made by different networks either in handling the cellular telephone link or subsequent landline telephone or internet connection to the call destination.

The stored information within the mobile station, typically stored within a smart card referred to as a Subscriber Information Module (SIM) card, is generally relevant only to the territory in which normal usage of the mobile station is anticipated, as for example where the data covers the territory defined by the country in which the subscriber primarily uses the mobile station.

A problem arises when the user moves to a different territory. Generally, agreements exist between operators in different countries which allow "international roaming" whereby the mobile station may register with a "roamed-to network" which will then communicate with the home network of the subscriber to establish authorisation and billing protocols for calls made by the subscriber using the roamed-to network. The least cost routing function of the mobile station is under these circumstances typically unusable because of the lack of available relevant data within its memory. A default mode of operation may thereby be utilised in which the routing of calls is determined by the roamed-to network and may therefore result in less than optimum call charges being rendered to the subscriber.

A further problem arises from the usage in mobile stations of a preferred network table and forbidden network table, generally stored in the SIM card, which are referred to by the mobile station at the time of selecting a roamed-to network from a plurality of available networks at the time of registration. In the absence of stored data relevant to the currently available networks, the mobile station will typically register with whichever of the available networks presents the greatest signal strength.

The present invention seeks to provide improved an apparatus and method for operating mobile stations in cooperation with mobile cellular networks.

According to the present invention, a mobile station determines whether or not data stored in the mobile station needs to be updated. In a preferred embodiment, the mobile station registers with a mobile cellular network and makes the determination from network information received from the network. The mobile station may generate a request message sent to a control centre to enable the control centre to respond with appropriate data which is then stored in the mobile station for further use.

Preferred embodiments of the present invention will now be described by way of example only and with reference to the accompanying drawings of which;
Figure 1 is a schematic diagram illustrating registration of a mobile telephone with a local cellular network;
Figure,2 is a schematic diagram of the components of the mobile telephone of Figure 1;
Figure 3 is a schematic diagram of the components of the SIM card of the mobile telephone of Figure 2;
Figure 4 is a diagram representing the data stored in the SIM card of the telephone of Figure 2;
Figure 5 is a diagram illustrating the applications stored in the SIM card of Figure 2;
Figure 6 is a flow chart of the network selection for registration;
Figure 7 is a flow chart of the determination of whether to request updated tables;
Figure 8 is a schematic diagram illustrating the call routing function;
Figure 9 is a schematic diagram showing the storage and transmission of programs used in the embodiments;
Figure 10 illustrates the functional elements of a generalized mobile station;
Figure 11 illustrates the functional elements of the control centre;
Figure 12 is a schematic diagram illustrating the monitoring for new networks and re-registration;
Figure 13 is a schematic diagram illustrating memory management and backup files ;
Figure 14 is a flowchart of the re-evaluation process;
Figure 15 is a schematic diagram of an apparatus in which subscriber information is replaced;
Figure 17 is a flowchart illustrating the updating of subscriber information;
Figure 18 is a flowchart further illustrating the updating of subscriber information and expanding on the determining step of Figure 17;
Figure 19 is a diagram illustrating networks using updated subscriber information; and
Figure 20 illustrates the data structure of subscriber information.

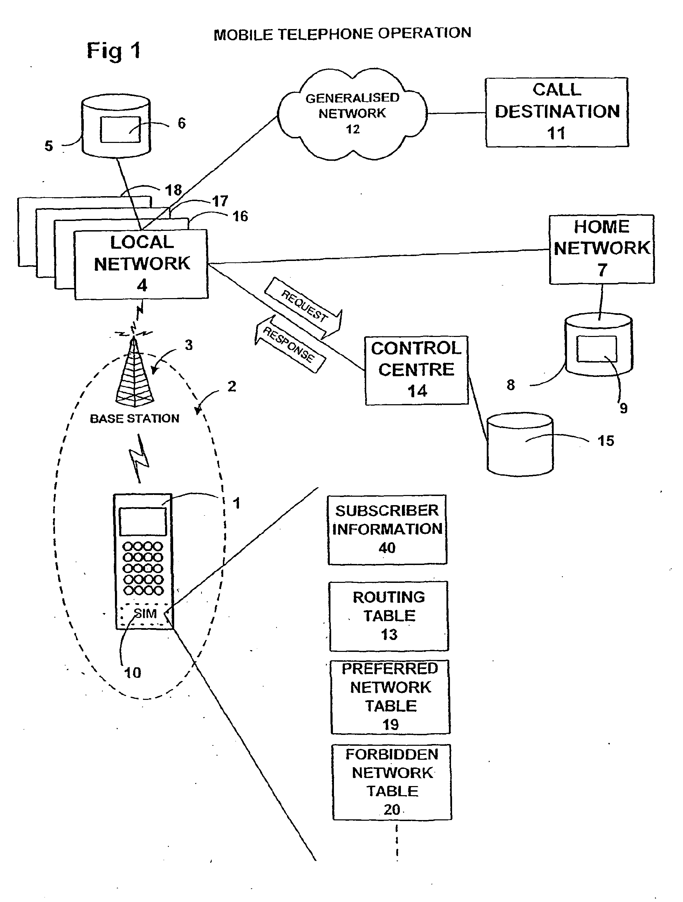

In the example of Figure 1, a mobile telecommunications apparatus is in the form of a mobile telephone 1 configured for use in a GSM (Global System for Mobile Communications) cellular telecommunications system. The GSM standard has been adopted by several countries including countries in the European community, agreements having been made to thereby allow the same mobile telephone 1 to operate in different countries. As illustrated in Figure 1, the mobile telephone 1 is currently located within a cell 2 served by a base station 3 of a local network 4, the term "local" here being used in the context that the local network is accessible via cellular broadcast to the mobile telephone 1 in its current location.

Here the base station 3 represents the physical telemetric apparatus responsible for wireless communication with the mobile telephone 1 whereas the local network 4 represents a service provider utilising a base station controller apparatus to manage communications with a number of different base stations, including radio interface management and handover from one base station to another for mobility when the mobile telephone moves from one cell to another.

The local network 4 maintains a database 5 which includes a Visitor Location Register (VLR) 6 containing information on mobile telephones currently registered with the local network, as in the case of mobile telephone 1.

A home network 7 is operated by a home service provider with whom a subscriber using the mobile telephone 1 has in this example a contractual relationship. The home network 7 maintains a database 8 containing a Home Location Register (HLR) 9 which contains details of the subscriber's account. Subscriber information 40 is stored in a SIM card 10 within the mobile telephone 1 to providing a unique identifier allocated by the home service provider.

The SIM (Subscriber Identity Module) card 10 is a smart card having the facilities of storing data and programs and having a moderate amount of processing power. The primary function of the SIM card 10 is to personalise the mobile telephone 1 to the subscriber, the main body of the mobile telephone 1 having its own microcomputer with greater processing power and memory, as described below in greater detail.

In Figure 1, communication between the mobile telephone 1 and a call destination 11 such as a telephone receiver is represented by a generalised network 12 providing connection between the local network 4 and the call destination. This generalised representation signifies that any number of different connection paths could be defined by the generalised network 12 including connection via long distance carrier, public service telephone network, the internet, one or more cellular networks, or a combination thereof. The connection path utilised for any given call generally presents a number of available options depending for example on the interconnect facilities available to the local network 4. The mobile telephone 1 has a call routing facility which allows routing information to be accessed from the SIM card 10 and added to a user defined call number such that a setup procedure initiated via the local network 4 results in the connection path to the call destination 11 being determined in accordance with a preferred route.

To achieve this routing function, the mobile telephone 1 has stored in its SIM card 10 a routing table 13 in the form of a look up table which allows routing information to be extracted rapidly and with minimal processing whenever a user initiates a call. The routing information is exchanged between the mobile telephone 1 and the local network via the base station 3 during the call setup procedure.

The routing table 13 is populated with data provided to the mobile telephone 1 from a control centre 14 which maintains a database 15 of routing information obtained by monitoring parameters including call charges and network performance of the different components of the generalised network 12 and calculating therefrom the preferred routes corresponding to each call destination.

When the mobile telephone 1 is turned on, it needs to register with the local network 4 so that subsequent calls can be rapidly set up by the local network. As part of the registration process, there is an exchange of information between the local network 4 and the home network 7 to establish the authenticity of the subscriber's proposed use of the network and to establish the manner in which calls are to be billed. To commence the registration process, the mobile telephone 1 will typically need to choose between a number of available networks including the local network 4 and additional networks 16, 17 and 18, any number of which may be detected as being available at the current location. For simplicity, Figure 1 shows three additional networks 16, 17, 18 sharing the common base station 3 with the local network 4.

In selecting a network for registration purposes, the mobile telephone 1 refers to a preferred network table 19 which lists networks in order of preference. The mobile telephone 1 also refers to a forbidden network table 20 which lists those networks for which the subscriber does not have authorisation from the home network 7 to complete registration.

Once registration is complete, the local network 4 includes details of the mobile telephone 1 in the Visitor Locator Register 6. The location of the mobile telephone 1 is therefore available to users of the networks in the GSM system, as for example in the case of routing calls to the mobile telephone 1.

The above simplified scenario assumes that the current information stored in the SIM 10 is up to date and includes entries in the routing table 13, preferred network table 19 and forbidden network table 20 which are relevant to the currently available networks such as local network 4 and additional network 16 to 19. The routing table 13 for example comprises a number of sub-tables directed to different aspects of routing and some of these tables are network dependent in that they contain information_which is specific to the identity of the network to which the mobile telephone is currently registered. Typically, in SIM cards of currently available memory size, the routing table 13 contains information for use with about 5 choices of local network 4.

A situation may therefore arise in which the mobile telephone 1 is turned on at, or moves to, a new location at which the information stored in the SIM 10 is entirely inappropriate to the available networks for registration or is in some respect incomplete. Limitations on memory size and bandwidth for updating data to the SIM 10 prohibit the simultaneous maintenance of updated data covering all possible available networks throughout the world for the GSM system. The mobile telephone 1 of Figure 1 is therefore provided with means for determining whether the currently stored information requires updating and is further capable of outputting a request message in order to receive an update of whatever information is determined to be required.

The components of the embodiment of Figure 1 will now be described in greater detail.

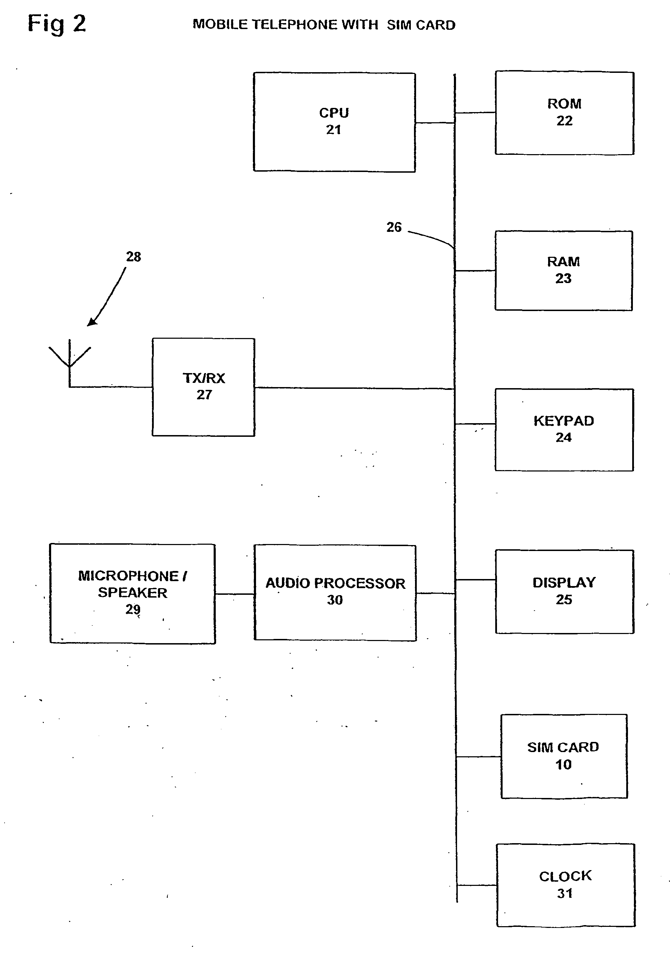

The structure of the mobile telephone 1 is illustrated in schematic generalised form in Figure 2 and comprises a processor 21 with Read Only Memory (ROM) 22 and Random Access Memory (RAM) 23. A keypad 24 is provided for the input of user commands including dialled telephone numbers and a display 25 in the form of a liquid crystal display is'operable to display dialled numbers and menu information. The SIM card 10 is removably inserted within the mobile telephone 1 so as to be electrically connected to a bus 26 which operatively connects the above components.

A transmitting and receiving circuit 27 is also provided, being connected to an antenna 28, and a microphone and speaker unit 29 is coupled to an audio processor 30. The mobile telephone also includes an internal clock 31.

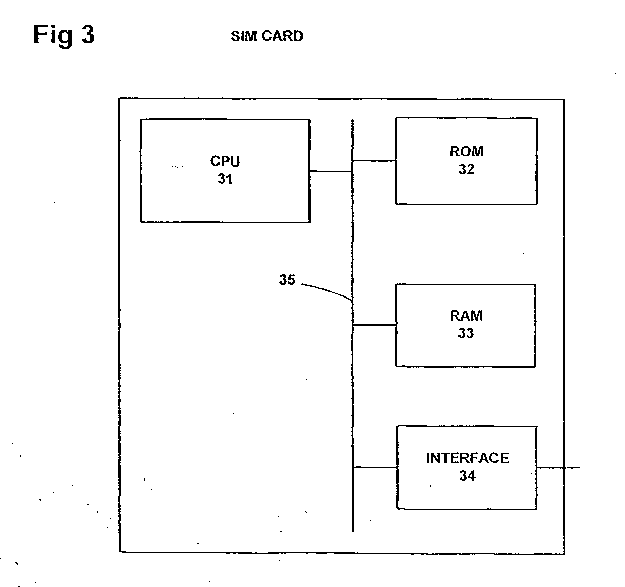

Figure 3 illustrates schematically the contents of the SIM card 10 which comprises a processor 31 with a ROM 32 and RAM 33 formed of a flash memory so that the contents of the RAM persist when the SIM card is powered down. An interface 34 is also provided for external connection and communication with the bus 26 of the main body of the mobile telephone 1. An internal bus 35 interconnects the above components of the SIM card 10.

The processor 21 of the mobile telephone initiates all communication with the SIM card 10, communication taking the form of a command passed from the processor 21 via the bus 26 and followed by a response returned from the SIM via the interface 34.

Consequently, to ensure that the SIM card 10 is able to communicate with the processor 21, the processor 21 generates status commands at least every 30 seconds to the SIM card in order to give the SIM card the opportunity of establishing communication.

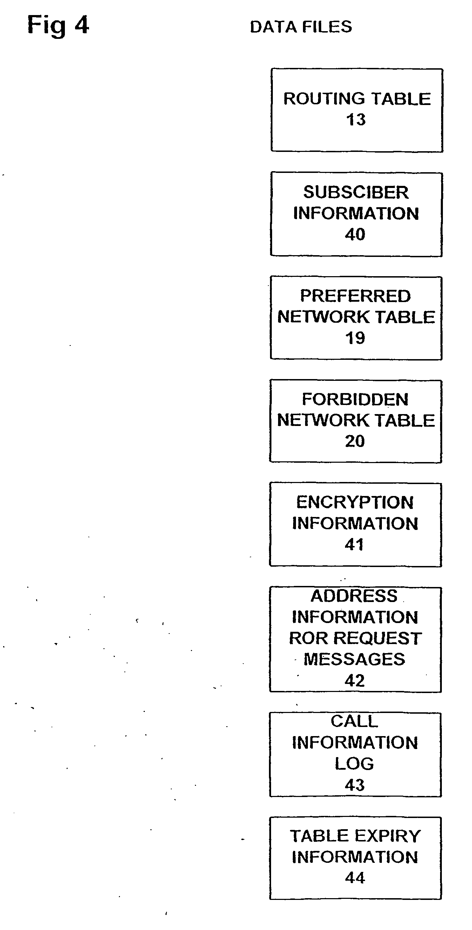

The data stored in the SIM card 10 is illustrated schematically in Figure 4 and includes the routing table 13, subscriber information 40, preferred network table 19, and forbidden network table 20 as described above with reference to Figure 1.

Additionally, the SIM card 10 store encryption information 41 for decrypting incoming messages received from the control centre 14 via the local network 4.

The SIM card also stores address information 42 to define the address to which a request message is to be output by the mobile telephone 1 when it is determined that updating information is required for the stored information, such as the routing table 13.

Call log information 43 is also stored in order to provide a database of call information, including the duration of calls made and received by the mobile telephone 1 and the routing information used to setup the call.

Table expiry information 44 is stored to identify the maximum usable life of data such as the routing table 13, each update having an associated expiry date beyond which it is not intended that the table should be used. The table expiry information 44 although illustrated as being separately stored is more conveniently stored as one of the fields of the data to which it relates.

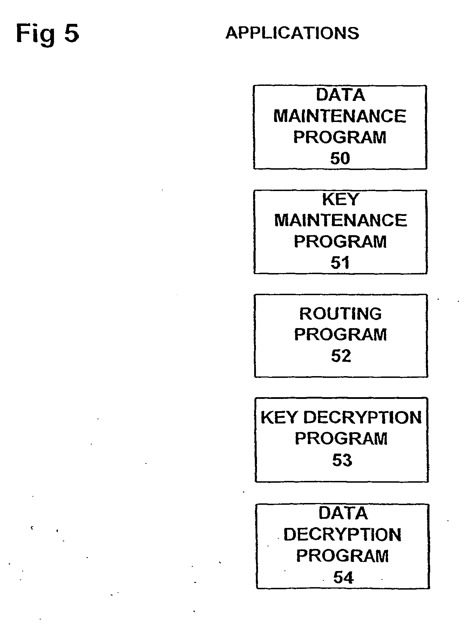

Figure 5 illustrates schematically the applications stored in the SIM 10. A data maintenance program 50 is an application for performing maintenance of data stored in the SIM 10, the data including primarily the routing table 13 which may require updating for a number of reasons. A key maintenance program 51 is provided to enable maintenance of decryption keys.

A routing program 52 is provided to perform the call routing function of the mobile telephone 1 which is initiated when a user inputs a dialled number defining the call destination 11 and enabling the routing table 13 to be rapidly accessed to retrieve the required code which is to be transmitted to the local network 4 for use in call setup to the call destination 11.

A key decryption program 53 is provided to perform the decryption of any new key which is transmitted to the mobile telephone 1 for use in decryption of data. A data decryption program 54 is provided for decrypting data received from a control centre 14, including updates to the routing table 13.

At the time of registration, a registration procedure program operated by the processor 21 of the mobile telephone 1 determines the selection of the network in the case of more than one network being available for registration. After registration, the data maintenance program 50 is called to determine whether it is necessary to request an update of the stored routing information, including the routing table 13, preferred network table 19 and forbidden network table 20.

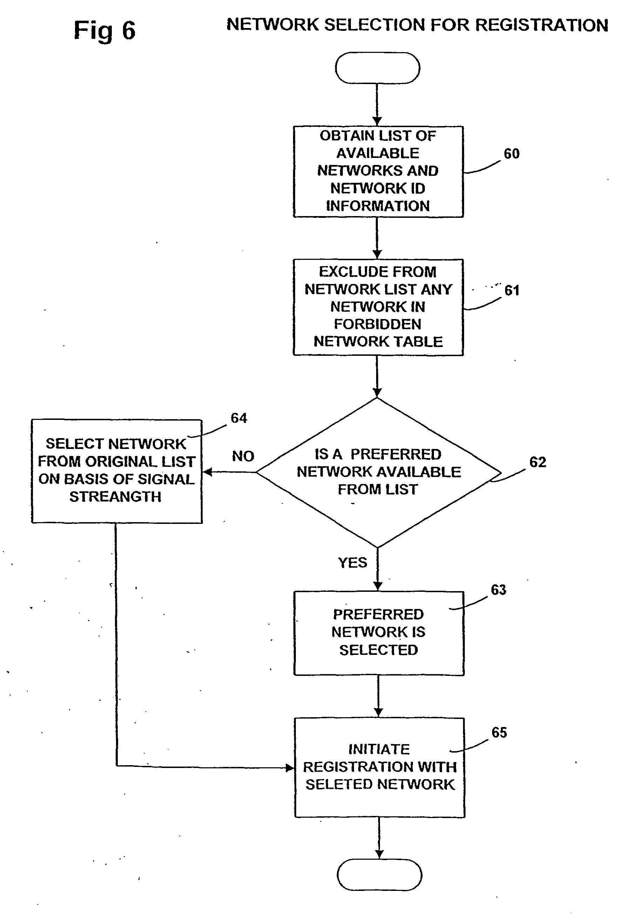

Figure 6 illustrates the manner in which an initial part of the registration procedure is carried out. At step 60, the mobile telephone 1 analyses broadcast signals from the available networks in the cell 2 and obtains a list of the available networks together with network identification information. This information includes the mobile country code (MCC) and mobile network code (MNC) for each network.

At step 61, the MNC for each network in the list is compared with the forbidden network table 20 and any networks which are excluded are removed from the list of available networks.

At step 62, the list of available networks is compared with the preferred network table 19 which has entries for a number of mobile network codes in order of preference. If one or more of the MNCs in the available network list is found in the preferred network table 19, the preferred network is identified and at step 63 the preferred network is selected for registration.

If, however, the preferred network table 19 does not include any of the networks in the list of available networks, a network is selected for registration at step 64 using the original list of available networks and selecting on the basis of maximum signal strength in the available broadcasts.

At step 65, the registration process is initiated using the selected network from either step 63 or 64.

During the registration procedure, the mobile telephone 1 and local network 4 exchange identifying signals. This allows the local network 4 to determine the identity of the subscribers home network 7 and home country. If the local network 4 is not the home network 7, the local network 4 exchanges messages with the home network 7 using one of the overhead data channels provided in the GSM system. This allows the subscriber's status to be authenticated and authority to be given by the home network 7 for calls by the mobile telephone 1 to be billed in an agreed manner.

The local network 4 updates the visitor location register 6 in its database 5 with information obtained from the home network 7 and from the mobile telephone 1 such that other networks wishing to direct calls to the mobile telephone are able to locate its current location with reference to the stored information.

The selection made in step 62 may be made in any one of a number of different ways, depending upon the capabilities of the apparatus. For example, the apparatus may be a mobile telephone having a SIM card in which an application is able to directly select the preferred network from the list of available networks using the command interaction between the main body of the apparatus and the SIM card.

Alternatively, if the application is not capable of direct selection, the application may be able instead to modify some of the elementary files stored in the SIM card. As an example, the preferred and barred network, lists can be modified in a manner which forces registration to a network selected by the application. This therefore requires the steps of amending the elementary files and then initialising the network search procedure using a soft reset procedure (i.e. resetting without turning off and on the power to the apparatus).

Where a soft reset facility is not available, the application must rely upon initiating re-registration when the user next turns off and on the power to the apparatus.

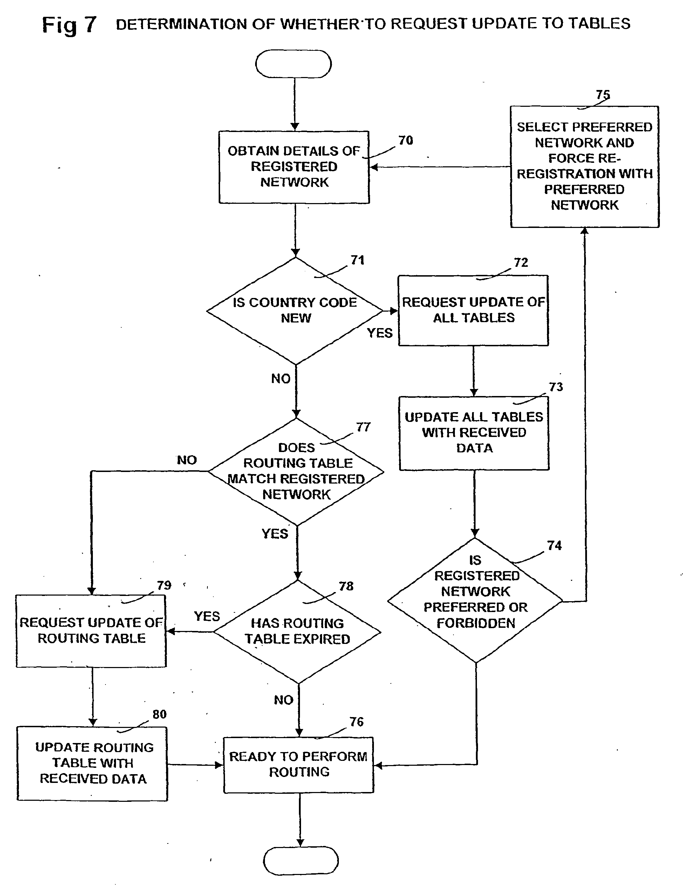

Figure 7 illustrates schematically the process after registration in which it is determined whether new tables need to be requested from the control centre 14. At step 70, the processor 35 of the SIM card 10 receives details of the network with which the mobile telephone 1 is now registered and actuates the data maintenance program 50. At step 71, it is determined from the MCC of the registered network whether there has been a change in the country code indicating that the subscriber has moved to a location in a new country. The MCC may simply be compared with a country code field in a stored record of the last network with which the mobile telephone 1 registered.

If it is determined that the country code is new, then it is determined that a request message must be generated in order to obtain new versions of the routing table 13, preferred network table 19 and the forbidden network table 20. A request message is generated at step 72 and transmitted as an SMS (Short Message Service) message via the local network 4 to the control centre 14. The control centre 14 responds by retrieving up-to-date tables from its database 15 and transmits a response message via the local network 4 to the mobile telephone 1. At step 73, the response message is received and the tables 13, 19 and 20 are updated with the received data.

The MNC of the local network 4 with which the mobile telephone is now registered is then compared at step 74 with the updated preferred network table 19 and forbidden network table 20. It is determined at step 74 whether the registered network is the preferred network amongst the available network list according to the preferred network table 19. If it is determined that another one of the available networks has a higher level of preference in the list, a process of re-registration is initiated at step 75 in order to replace the currently registered network with the preferred network which then becomes the "local network" referred to above. The process then repeats from step 70.

Similarly, it may be determined at step 74 that the currently registered network is listed in the forbidden network table 20, in which case step 75 similarly follows to force re-registration.

If at step 74 it is determined that the currently registered network is in fact the network of most preference according to the preferred network table 19, the status of the mobile telephone is determined at step 76 to be ready to perform routing using the updated tables.

If at step 71 the country code is determined not to be a new code, the contents of the routing table 13 are examined to determine whether routing information is available for use with the currently registered network. If this is the case, it is then determined at step 78 whether the routing table 13 is still valid by comparing current date and time information provided by clock 31 with an expiry date field included in the routing table. If the routing table 13 is determined to be still valid, the status of the mobile telephone 1 is then flagged at step 76 to be ready to perform routing.

If however at step 78 it is determined that the routing table has expired, or at least that relevant parts of the routing table relating to the registered network have expired and are no longer valid, a request message is generated at step 79 for an update of the routing table 13. The request message is transmitted as an SMS message to the control centre 14 which responds by retrieving data from its database 15 and transmitting a response message in SMS format.

At step 80, the response message is received and the routing table 13 is updated with the received data.

The status of the mobile telephone is then flagged at step 76 to be ready to perform routing.

The mobile telephone 1 then remains in standby mode until it is required to make or receive a telephone call. When the user initiates an outgoing call, the telephone number of call destination 11 is input using keypad 24 and buffered in RAM 23 of Figure 2. The processor 21 passes the dialled number to the SIM card 10 to actuate the routing program 52 which utilises the routing table 13 to extract routing information which is returned to the processor 21. The extraction of routing information is performed in the manner described in WO99/04578 and WO00/41486.

The processor 21 initiates a call setup procedure with the local network 4 by outputting signals via the transmitter circuit 27 which include the call routing information. The local network 4 responds by completing the setup of the call for the preferred route. After "call connection", the telephone call then proceeds until a "call disconnect" event is detected, the duration and other call parameters being logged by the SIM card and stored in the call information log 43.

When outputting the call routing information, the mobile telephone 1 inserts carrier access dialling information in front of the dialled number generated by the user. This information is interpreted by the local network 4 to set up the call via the networks defined by the carrier access dialling information. The dialling information can be in the form of a 1XXX type access number or a free phone number such an International free phone number. The signalling of this information to the local network 4 is generally transparent to the user and utilises the conventional call setup signalling channel provided within the GSM system. If however the amount of information to be transmitted requires a string of digits which exceeds the normal field for such a signal, the final digits of the signal are output as DTMF (Dual Tone Multi Frequency) signals after the voice channel has been established.

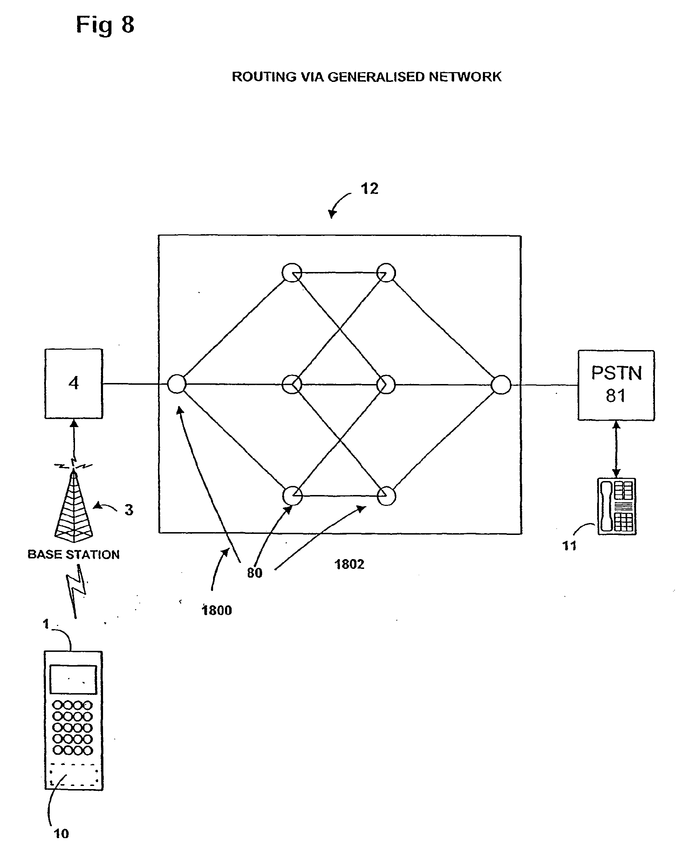

Figure 8 illustrates schematically the manner in which such routing via the generalised network 12 proceeds. The generalised network 12 is shown to comprise a number of constituent networks 80, each of which constitutes a node which is selected by the routing information to determine the route path to the call destination 11. Each of the nodes 80 could comprise a mobile network, long distance carrier, or any other private or public telecommunications network. In the example of Figure 8, the call destination 11 receives the call via the public service telephone network 81 which constitutes the last network (node) in the route. In other examples, however, the final network (node) could be a further mobile network, a long distance carrier network or the Internet.

For a given local network 4, the available nodes of the generalised network 12 will depend upon the physical location of the connection to the local network and the interconnect facilities currently available, these being determined by commercial agreements and operational factors.

The form of the request message and response message exchanged between the mobile telephone 1 and the control centre 14 has been referred above as being an SMS message. This exchange of SMS messages is transparent to the user of the mobile telephone 1 since a special type of SMS message is utilised which does not result in the SMS message being displayed in the display 25 of the mobile telephone. The response message is encrypted to preserve confidentiality of commercial information and to ensure subscriber authentication. Encryption keys are therefore required to be held in the SIM card 10 in the encryption information 41 shown in Figure 4, this information being periodically updated using encrypted messages from the control centre 14 and operation of the key maintenance program 51 of Figure 5. Decryption of the received keys is carried out using the key decryption program 53 and the received data is decrypted using data decryption program 54.

The user part of the SMS messages is compressed in order to maximise use of available bandwidth for messaging, and thereby requires all received messages in the mobile telephone 1 to be decompressed using an algorithm available to the processor 21.

When updating the routing table 13, memory provided by the SIM card 10 will be overwritten as required. Generally, the routing table 13 comprises a number of sub tables, for example containing information relating to a number of different selections of local network 4, and, depending upon the amount of available memory, it may not be necessary to overwrite all of the sub-tables currently stored when an update of routing information is received. The memory may therefore be managed to achieve caching of sub tables. Memory may be overwritten on the basis of retaining the most recently used information where possible so that it is available for reuse if necessary. This facility may for example by useful where the subscriber repeatedly crosses a territorial boundary between two adjacent territories so that caching the stored information reduces the number of updating messages required. In an alternative embodiment, the request and response messages may be transmitted using USSD (Unstructured Supplementary Service Data), an alternative protocol for data transmission within GSM. Embodiments using cellular telecommunications system other than GSM may similarly use whatever alternative message protocols are appropriate.

The preferred embodiment has been described with reference to a mobile station in the form of a mobile telephone 1. Further embodiments are envisaged in which different forms of mobile station are used to make and receive telephone calls for voice, data or video communication and the above described method and apparatus may readily be adapted for such further embodiments. In particular, the mobile telephone may be a WAP telephone which makes calls to access data in the form of pages of WML (Wireless Mark-Up Language) or similar mark-up languages for retrieving documents or images. Handheld computer devices and facsimile devices may similarly utilise the above described call routing and routing table maintenance functions.

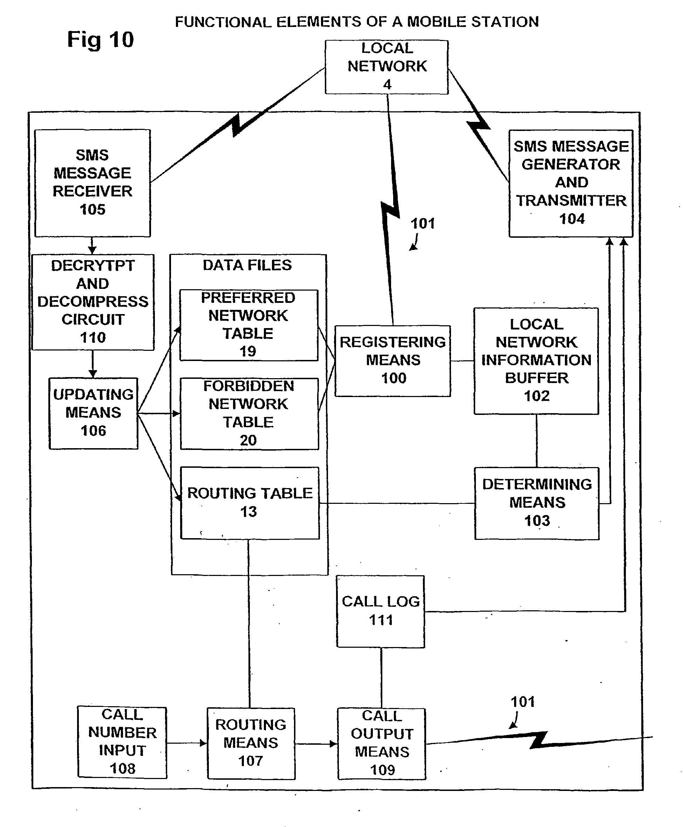

Figure 10 illustrates schematically the functional elements of a mobile station in a generalised embodiment of the present invention. A registering means 100 interacts externally with the local network 4 of an air interface 101 and accesses internally the preferred network table 19 and forbidden network table 20 when selecting a network for registration from a number of available networks. The registering means 100 stores local network information in a buffer 102 which is accessed by a determining means 103 which determines whether the stored routing information requires updating. The determining means therefore also requires access to the routing table 13.

If the routing table 13 requires updating, the determining means 103 commands a message generator 104 to generate and output an SMS message over the air interface 101 to the local network 4 for onward communication to the control centre 14.

A received message is received by message receiver 105 which, after decompression and decryption by circuit 110, allows the updating information to be passed to an updating means 106 for updating the routing table 13 as well as the preferred network table 19 and the forbidden network table 20.

A routing means 107 has access to the routing table 13 so that, when an outgoing call to a call destination 11 is initiated by a call number input 108, the routing means intercepts the call making process and provides a call output means 109 with routing information which will determine the route taken through the generalised network 12 between the local network 4 and the call destination 11. The call output means 109 outputs via the air interface 101 the call initiating signals used by the local network 4 in its call setup procedure.

The call number input may simply be the keypad 24 of Figure 2 or may be constituted by a stored directory of telephone numbers selectively addressed by the user inputting an alpha-numeric string or a voice command interpreted by a speech recognition system.

The mobile station 1 may optionally have an override for bypassing the operation of the routing means 107 or for imposing a user preference for routing the outgoing call.

Figure 10 also illustrates a call log 111 used for storing the duration and call destination of calls generated by the mobile station 1. This data is periodically communicated to the control centre 14 by including call log information in the request message output by the message outputting means 104. The call log information may be utilised by the control centre 14 to verify billing information generated by networks within the generalised network 12 and by the local network 4. This information may also be useful in calculating preferred routes since it facilitates the collection of network usage data for a number of subscribers.

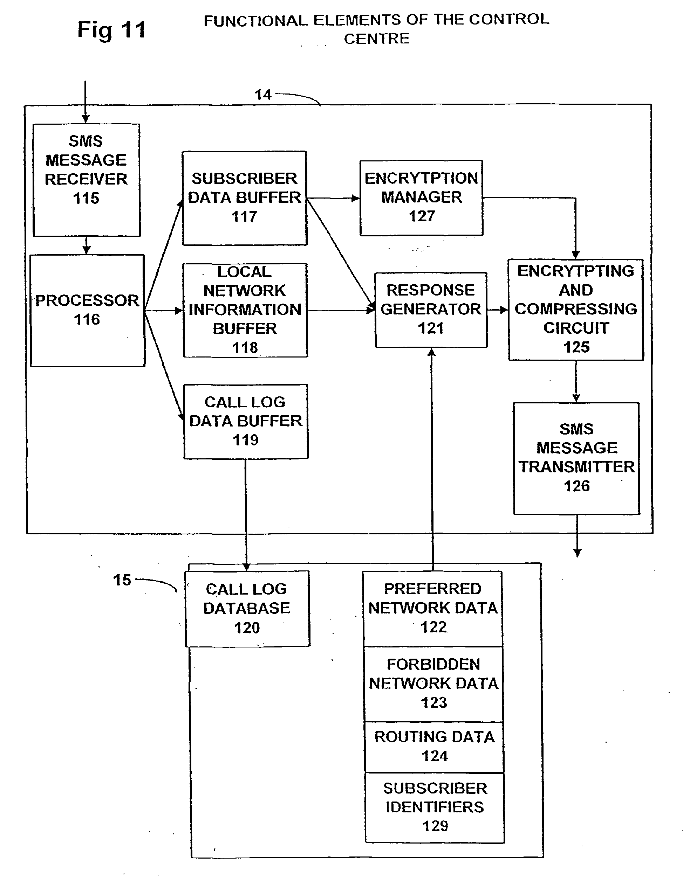

Figure 11 illustrates the functional elements of the control centre 14. A receiver 115 receives SMS messages from mobile telephones 1 and a processor 116 extracts from the messages subscriber data, local network information and call log data which are stored in respective buffers 117, 118 and 119.

The call log data is processed and transferred to database 15 as a call log database 120.

The local network information in buffer 118 is input to a response generator 121 which refers to preferred network data 122, forbidden network data 123 and routing data 124 stored in the database 15, thereby extracting the relevant data for use with the local network with which the mobile telephone 1 is currently registered.

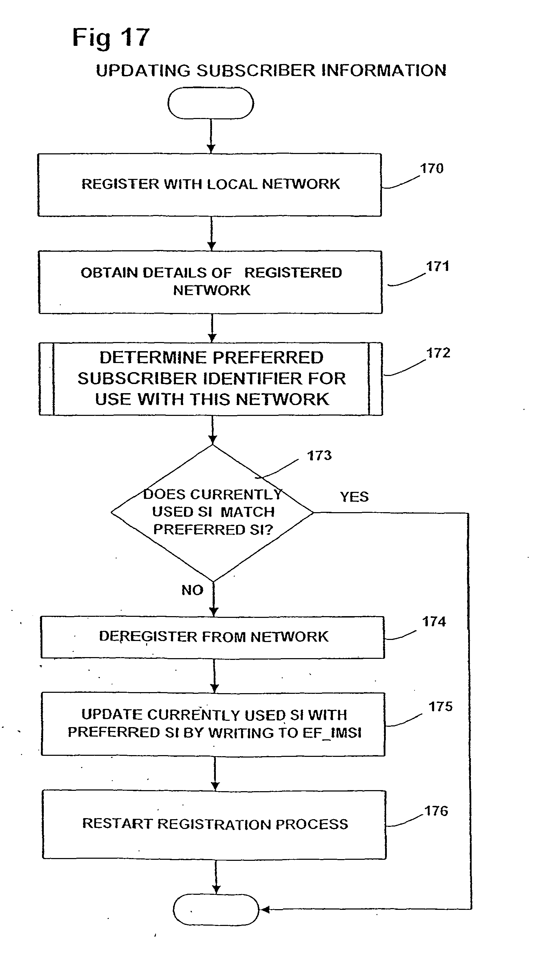

Reference may also be made to a database of subscriber identifiers 129 when using a method described below with reference to Figure 17.

An appropriate response is generated in which updating information is formulated for updating the routing table 13, preferred network table 19, and forbidden network table 20 of the mobile telephone 1 as illustrated in Figure 1.

The response message is encrypted and compressed by circuit 125 before being output by a SMS message transmitter 126. The form of encryption used is controlled by an encryption manager 127 to ensure that an appropriate encryption key is utilised, depending upon the currently stored encryption information 41 in the SIM card 10 of the mobile telephone 1. Periodically, the encryption manager 127 requires the response generator 121 to include in the response additional updating information for updating the decryption key stored in the mobile telephone. As part of the encryption procedure, the SMS message received by the receiver 115 may include a random number challenge which is passed to the encryption manager 127 for use in the encryption performed by circuit 125.

The described embodiment of Figure 1 provides optimum routing by means of routing information which is passed to the local network 4 to determine the choice of forward routing. The routing table 13 may include instructions for calls to certain call destinations 11 to be routed using a different protocol in which, instead of appending routing information to the outgoing call setup signals, an outgoing message, such as an SMS message is generated and forwarded to the control centre 14 to request routing information. The control centre 14 would then respond by returning the required routing information which the mobile telephone 1 would then add to the call routing information passed to the local network 4.

The choice of optimum route will generally be made on the basis of least cost. Alternatively, the best route calculated by the control centre 14 may rely upon choice of best bandwidth available from the networks 80 of the generalised network 12 or other performance criteria, or to maximise use of commercial agreements for call routing made with certain networks or service providers.

In the described embodiment of Figure 1, the control centre 14 calculates the preferred route before downloading data to the routing table 13 to enable the routing information to be' accessed rapidly and with minimum computational effort. Alternative systems are envisaged in which the control centre 14 collates tariff information and downloads the raw data, or partially processed data, to the mobile telephone 1 for storage in the SIM card 10. The processor 21 of the mobile telephone body or the processor 35 of the SIM card 10 may then calculate the preferred route information based on the tariff data or other parameters defining the possible network connections available. This calculation may be performed at the time of call routing on demand and in response to the input of a destination call number or alternatively may be processed on receipt of the tariff data to populate the routing table 13 for use as a look-up table in the manner described above.

Further aspects of the present invention have application to mobile stations such as mobile telephones in which the routing function is not employed. Such mobile stations may still include the preferred network table 19 and forbidden network table 20 of Figure 1 but without the routing table 13. For such mobile stations, the above described procedure for registration with reference to the preferred network table 19 and forbidden network table 20 may still be followed. After registration with a local network 4, a request message may be output using SMS or equivalent protocol to a control centre 14, requesting updating information for the tables 19 and 20. The mobile station 1 may in this embodiment determine whether such a request message is required by detecting whether the country code of the local network is different to the country code of the network in which the mobile station was previously registered or the tables may have an associated expiry date which may be compared with current time and date information to determine whether the stored information remains valid.

Such mobile stations may accumulate call log data to be included periodically in the request message for analysis at the control centre 14.

Also envisaged in accordance with the present invention are mobile stations in which the process of accumulating call log data and communicating the data to be control centre 14 occurs independently of any request messages for updating information. As such, in accordance with this aspect of the invention, the generation of request messages for updating information is optional.

In the embodiment of Figure 1, the updating of stored information is initiated by the generation of a request message from the mobile telephone 1. The mobile telephone 1 may additionally be provided with means for responding to a control instructions from the control centre 14 such that the mobile telephone 1 generates a request message in response to receipt of the control instruction. The control centre 14 may issue such an instruction for example when major changes in the information stored in its database have been necessary, for example, to reflect a change in network costs or performance such as a failure of one of the networks 80 in the generalised network 12.

Alternative embodiments are envisaged in which some or all of the data files of Figure 4 and related applications of Figure 5 are stored in the main body of the apparatus, as for example in ROM 22 and RAM 23 and operated using CPU 21 of Figure 2.

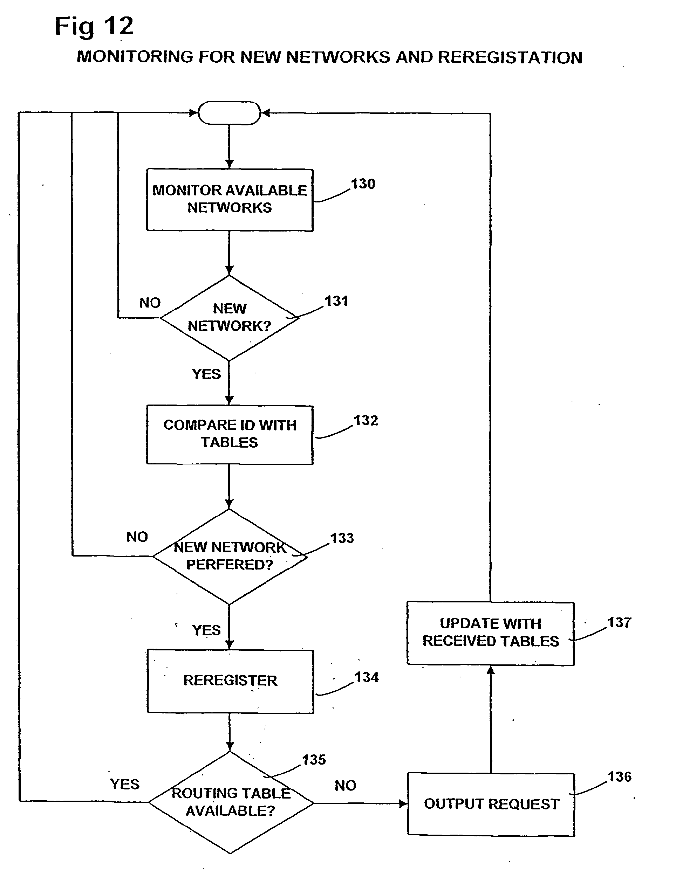

In the above described method of Figure 7, the final step 76 places the apparatus ready to perform routing. In a preferred embodiment illustrated in Figure 12, the apparatus 1 continues to monitor at step 130 the availability of networks and, when a new network is detected at step 131 as becoming available, the network identity information for the new network is compared at step 132 with the stored, preferred and forbidden network tables. If the newly detected network is determined at step 133 to have a higher preference according to the preferred network table than the network with which the apparatus is currently registered, the apparatus re-registers at step 134 with the preferred network. If at step 135 it is determined that no routing table is available for the new network, a request message for updating tables is then output at step 136 and a subsequently received response message used to update the stored routing information at step 137.

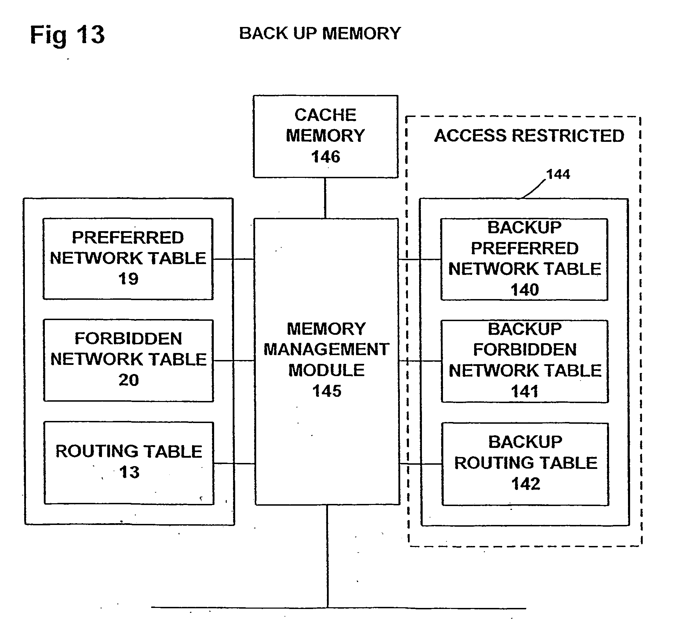

In Figure 4, the routing table 13, preferred network table 19 and forbidden network table 20 are stored in the SIM card in files which are accessible to any of the applications operable in the SIM card 10. This includes the facility for an external network such as the home network 7 to overwrite the information in these files using file maintenance facilities provided under the GSM system. A preferred embodiment of the present invention as illustrated in Figure 13 therefore additionally includes the facility of providing respective backup files 140, 141, 142 in a second portion 144 of memory and which contain all of the information in the routing table 13, preferred network table 19 and forbidden network table 20 in the form in which they are updated by response messages from the control centre 14. Access to these files is controlled by a memory management module 145 which restricts access to the back up files to applications such as the data maintenance program 50 and the routing program 52. Whenever accessing these files using the routing program 52, a comparison is first made between the stored files and the backup files and, if any disparity exists, the files are overwritten with the information contained in the backup files. This therefore negates the effect of any interference in the files from sources other than the control centre 14 which may for example occur when a network overwrites the preferred network table 19 or forbidden network table 20 with its own data. The memory management module 145 also controls access to storage in a cache memory 146 which is used to store a copy of any data deleted from memory so as to retain most recently deleted data. The cached data is then available for retrieval and may avoid the need for sending a repeat request message for data which has been recently overwritten.

The memory management module 145 may be implemented by the processor 31 using program instructions stored in memory.

The expiry of validity of stored data may simply be determined by storing with the data a time and date at which the validity expires, as described above. Alternatively, in those cases where the apparatus is not provided with an internal clock, the number of calls made by the apparatus may be counted and used as a parameter for determining when validity expires. This may be achieved for example by entering a count value when the data is updated and decrementing the count value at each call, validity being held to have expired when the count is reduced to zero.

Alternatively, the prompt commands input to the SIM card 10 may be counted to effectively measure elapsed time during which the apparatus is in use. A count value may similarly be stored and decremented to determine when validity has expired.

Alternatively, the apparatus may output a message to the control centre 14 periodically in order to be informed whether the validity of the data has expired.

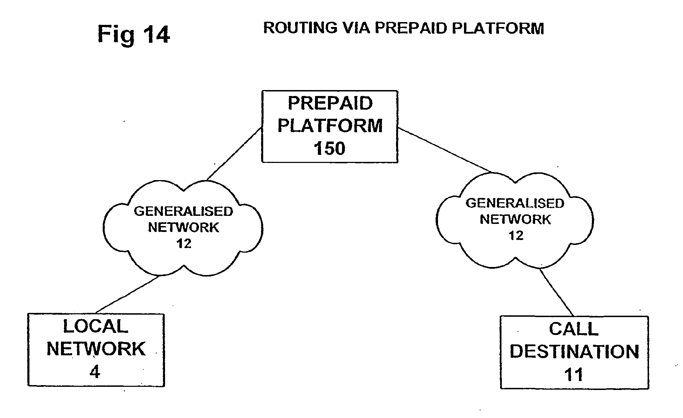

A particular problem associated with prepaid mobile telephone use is that they cannot generally be used in countries other than those in which the home network is located. An embodiment of the present invention illustrated in Figure 14 provides a solution to this problem by providing that all calls made by apparatus which is the subject of a prepaid contract are routed via a prepayment platform 150. This is achieved by including the network address of the platform in the routing information. The prepayment platform 150 then has the power to regulate whether the call is allowed to proceed and the ability to terminate the call based on the status of the subscriber's account, such as when credit runs out.

Calls may thereby be made from any country since the prepayment platform 150 retains control of call making and call duration. Since the calls must in this embodiment be routed via the prepayment platform 150, the routing table 13 must always be used to ensure correct routing. The apparatus 1 therefore includes a lock out facility preventing the making of an outgoing call if no routing information is currently available for routing to the call destination 1 via the local network 4 and the prepayment platform 150.

The routing means 107 of Figure 10 provides the lock out facility such that, for instance where the subscriber has a prepayment subscription, the routing means is operable to determine whether the currently available routing table 13 is valid in terms of expiry date or other relevant criteria and, if not valid, the routing means is operable to prevent the call output means 109 from initiating a telephone call and initiates instead the generation of an appropriate display message to the user.

Various embodiments are herein disclosed for controlling the selection of network with which registration occurs, Figure 7 for example disclosing a method in which an initial registration can be replaced by a re-registration with a preferred network after an evaluation process in which reference is made to stored tables and those tables updated if necessary by sending a request message and receiving a response.

Such control processes will naturally occur each time the apparatus is turned on. During continued operation of the apparatus, it is also appropriate to periodically re-evaluate the selection of network for registration since for example the user carrying the apparatus may move to a new location and may be continuously in motion so that it is not necessarily appropriate to remain registered with the same network.

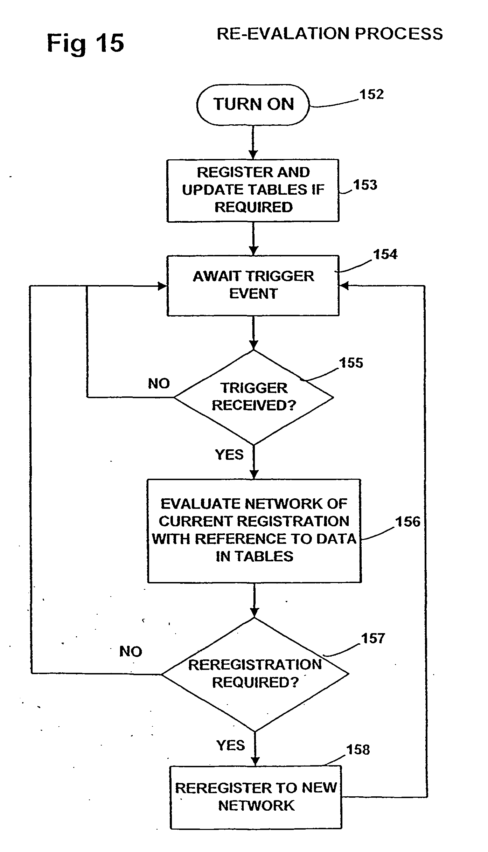

Figure 15 illustrates schematically an example of a re-evaluation process in which the apparatus reevaluates the network selection and if necessary registers.

At step 152, the apparatus begins operation, possibly at a different location from where the apparatus was previously in use. At step 153 the apparatus performs the steps described above with reference to Figure 7 including registering with an initial local network, evaluating the registration with reference to stored tables, updating the tables if necessary by sending and receiving messages, and if appropriate, re-registering with a new network.

At step 154, the apparatus remains registered with the network arrived at as a result of the process of step 153 during a period of operation in which the apparatus awaits a trigger event for reevaluation. If at step 155 it is determined that a trigger event has occurred, the apparatus evaluates at step 156 whether the network with which the apparatus is currently registered is the optimum selection, the evaluation being made by referring to data stored in tables 19 and 20 for example.

If at step 157 it is determined that the currently registered network is the most appropriate, no action is taken and the apparatus awaits a further trigger event at step 154.

If however it is determined at step 157 that re-registration with a new network would be desirable, re-registration is proceeded with at step 158 and operation of the apparatus continues using the new network, and awaiting a further trigger event at step 154.

A trigger event may be initiated periodically by the expiry of a timing interval, for example a thirty minute interval.

A trigger event may be generated every time one of the tables is updated using new data received from the control centre 14.

A trigger event may be generated whenever the apparatus receives a location updating message from the network 4 with which it is currently registered, such messages typically being generated at periods of about thirty minutes and contain current location information including country code, network code and an indication of the cell in which the apparatus is operating.

A trigger event may be generated at each detection of movement of the apparatus from one cell to another.

The apparatus may be configured such that step 155 is responsive to trigger events arising from any of the above occurrences.

In each case, the decision making process will be carried out by the processor 31 of the SIM card in accordance with program instructions.

The above process allows the reevaluation of network registration to be frequently implemented. This is advantageous in circumstances where for example the operator of the home network 7 wishes to have optimum control over network registration when a user is operating the apparatus abroad. The process may be used to maximise usage of a preferred foreign network, thereby allowing the operator of the home network 7 to enter into agreements with networks in other countries whereby cost benefit can be achieved in return for agreeing to provide subscribers apparatus with a preferred network list favouring a particular foreign network. An overall cost benefit to the user may thereby be achieved.

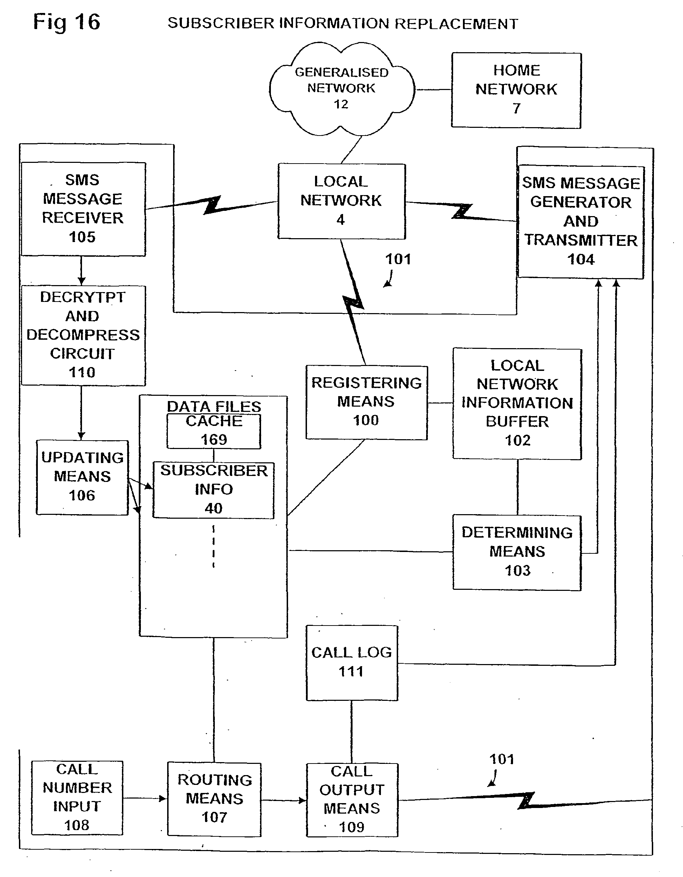

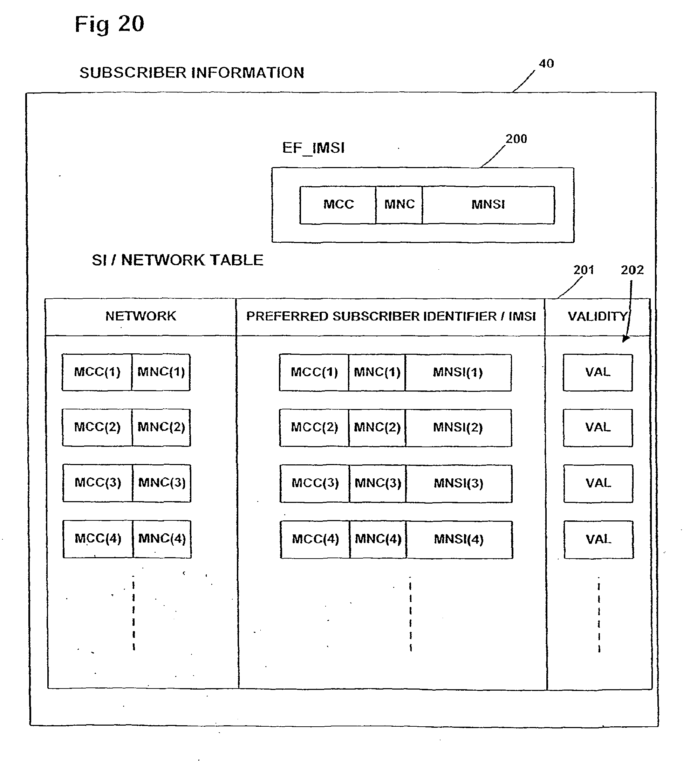

A further example will now be described with reference to Figure 16 using corresponding reference numerals to those of preceding figures where appropriate for corresponding elements. In Figure 16 an apparatus such as a mobile telephone includes functional elements corresponding to those described above with reference to Figure 10, differing in that the data files accessed by the updating means 106 include the subscriber information 40. The subscriber information 40 is illustrated in Figure 20 and is stored in a data structure which includes a current subscriber identifier memory 200 containing subscriber identity data which in the GSM system is an IMSI (International Mobile Subscriber Identity). The memory 200 is here an elementary file which is generally referred to in GSM by the file name EF_IMSI. The IMSI comprises a fifteen digit number of which the first three digits define a MCC (Mobile Country Code), the next two digits define an MNC (Mobile Network Code) and the final ten digits define an MSIN (Mobile Subscriber Identity Number). The IMSI read from the memory 200 is communicated to the local network 4 which interprets this subscriber identity data as identifying the home network 7 of the subscriber and the country in' which the home network 7 is located.

The MSIN will be different for each subscriber of the home network 7 so that throughout the GSM system no two IMSI numbers are the same.

In this embodiment however, the same subscriber account is allocated more than one possible subscriber identifier so that the subscriber is associated with a plurality of IMSI numbers. Each of these IMSI numbers is allocated by a respective network of a group of associated networks operating in different countries, one of the networks being the home network 7 which administers the subscriber account and has operating agreements with each of the associated networks of the group. The subscriber information 40 as shown in Figure 20 includes a data structure which includes a table in which, for each of a list of networks in various countries which the apparatus is likely to encounter, an IMSI number is indicated as being the preferred subscriber identifier. Each network is described in terms of a Mobile Country Code (MCC) and Mobile Network Code (MNC). The table including the preferred subscriber identifiers for each of a number of networks is written in the SIM card 10 when initially supplied to the apparatus. The subscriber identifiers can be updated for example in response to received messages from the control centre 14. Each subscriber identifier is provided with a validity field 202 from which the SIM card processor is able to determine whether the preferred subscriber identifier information is currently valid. The information may be time expired with reference to a system clock, or with reference to similar criteria as referred to above when describing tables 13, 19 and 20.

At any given time, one of the subscriber identifiers will be stored in the current subscriber identifier memory 200. Depending upon the identity of the network with which the apparatus is currently registered, the contents of the file 200 may need to be updated to ensure that the preferred subscriber identifier for that network is stored in memory 200 and thereafter indicated as subscriber identity data to the local network 4.

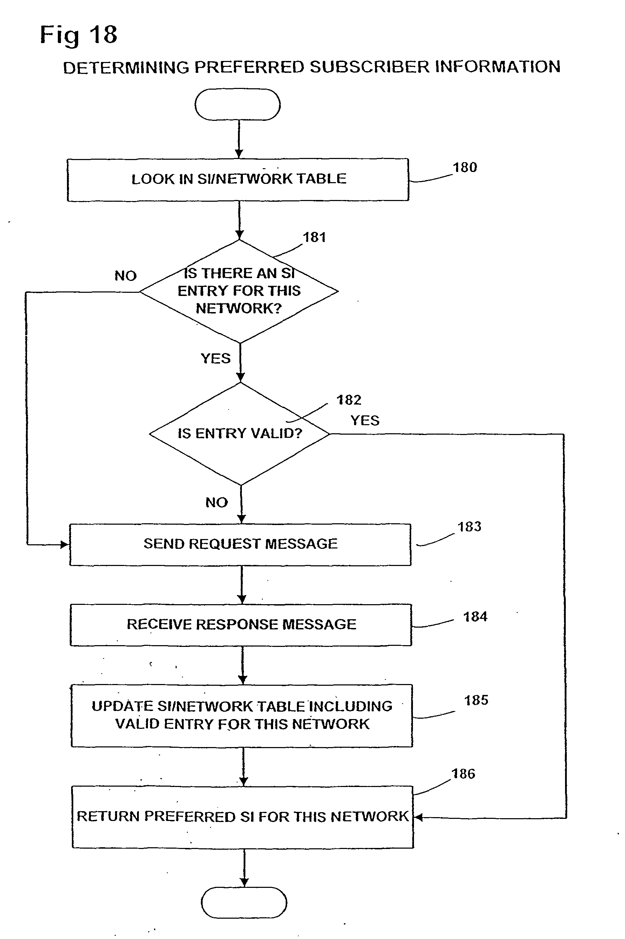

A process of determining whether the memory 200 contains the preferred subscriber information and of making updates when necessary is illustrated in the flowcharts of Figures 17 and 18.

At step 170 of Figure 17, the apparatus makes an initial registration with a local network 4 and at step 171 obtains details of the registered network, specifically determining a network identifier comprising a country code MCC for the network and its mobile network code MNC. At step 172 the apparatus determiners the preferred subscriber identifier for use with this network, typically referring to a look-up table 201 as illustrated in Figure 20. The determining process 172 will be described in greater details with reference to the flowchart of Figure 18 below.

The preferred subscriber identifier is compared at step 173 with the subscriber identity data currently stored in the memory 200, i.e. the elementary file EF_IMSI, and if they are the same, no change is made and the processing continues normally, for example by entering the procedure described above with reference to Figure 7.

If however they are not the same, the contents of the current subscriber identifier memory 200 need to be updated. This is implemented in this example by de-registering from the local network 4 at step 174 and then overwriting the contents of the EF_IMSI file with the preferred subscriber identifier copied from the relevant entry in the table 20i.

At step 176, the registration process is restarted during this new registration process, the local network 4 is presented with signals from the apparatus 1 which contain new subscriber identity data 40 read from the memory 200 and therefore the local network assumes that the apparatus of a new customer has commenced operation in the cell from which the signals are received. The network will assume that the home network of the subscriber is the associated network as indicated in the subscriber identity data read from the memory 200 and will process the registration and any calls made via the network accordingly. Account information will then be passed to the actual home network 7 by the associated network.

Figure 18 illustrates in greater detail the process referred to above at step 172 of determining the preferred subscriber identifier for use with the currently registered network. At step 180, the processor 31 of the SIM card 10 accesses the data structure to refer to the look-up table 201. For each row of the first column of the table 201, a network is identified by values of MCC and MNC. For a given network identifier, the preferred subscriber identifier is indicated in the second column at the same row, defining the IMSI number and defining each of its components, MCC, MNC and MNSI. In the same row, validity data 202 is provided in the third column for each of the preferred subscriber identifiers.

At step 181, the processor 31 determines whether there is an existing entry in the table for the network identifier of the currently registered network and, if there is, determines at step 182 from the validity information 202 whether the entry is valid. If the entry is valid is indicated as being valid, the processor at step 186 takes the value of preferred subscriber identifier and proceeds with the process of Figure 17 at step 173.

If however there is no entry in the table corresponding to the network identifier, or if the entry is indicated as not being valid, the processor at step 183 initiates the sending of a request message to the control centre 14, requesting updating information for updating the table 201 and providing a valid entry corresponding to the network identifier.

A response message containing this information is received at step 184 and the table is updated at step 185. Step 186 then follows as described above, continuing the process of Figure 17 at step 173.

As indicated above, step 175 results in the new value of subscriber identifier being written to the memory 200 so that the elementary file EF_IMSI now contains the preferred subscriber identifier corresponding to the network identifier for the currently registered network.

The updating means 106 of Figure 16 updates the subscriber information 40 stored in the data files of the SIM card. The information previously stored in EF_IMSI is transferred to cache memory 169 for possible future use.

The memory 200 will over time accumulate a table of IMSI numbers, which are available for use with a range of networks in a number of countries.

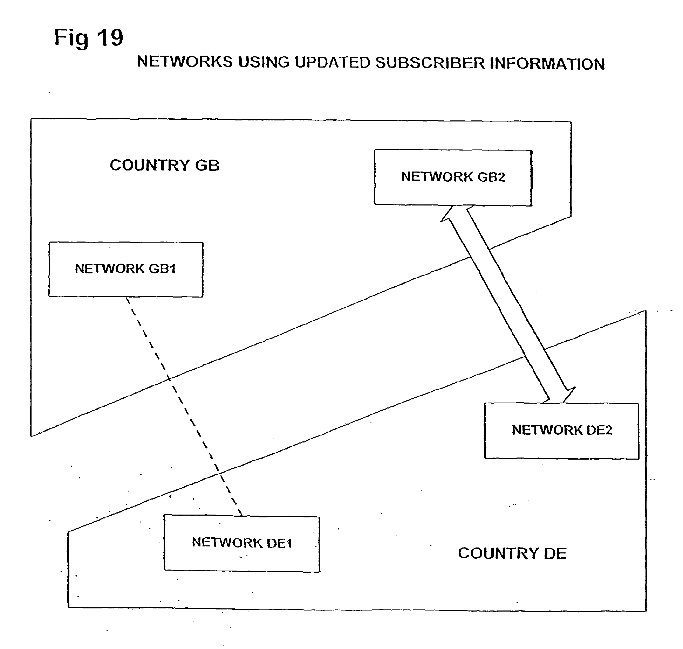

The usefulness of the ability to update the subscriber information is illustrated schematically in Figure 19 in which a network GB1 located in a first country, in this example the United Kingdom, has a roaming agreement with a network DE1 in a second country, in this case Germany, whereby subscribers whose home network is the network GB1 may operate their mobile telephones in Germany, but subject to each call incurring a roaming agreement surcharge paid by the subscriber. (The term "roaming" here is used to indicate use of a network in a country different from the home network).

Subscribers of a further network GB2 in the United Kingdom do not have to pay the roaming agreement surcharge when using an associated German network DE2 because their mobile telephone apparatus utilises the features described above with reference to Figures 16 to 20. The network GB2 has an arrangement with the associated network DE2 in Germany such that each subscriber of network GB2 is allocated a first IMSI by the network GB2 and a second IMSI by the network DE2. When operating in the United Kingdom, the mobile telephone apparatus uses the first IMSI and when operating in Germany and registered to network DE2 it uses the second IMSI. The subscriber may thereby make use of the network DE2 when operating in Germany without the requirement of a roaming agreement, the network DE2 treating calls to and from the mobile telephone apparatus in the same way as local calls from German customers having DE2 as home network. Since it is advantageous for the apparatus to register with network DE2 rather than DE1, the preferred network table 19 and forbidden network table 20 can be configured accordingly by the control centre 14 to make best use of this advantage. Typically the operators of network GB2 and network DE2 are the same or related companies who cooperate to minimise their own costs and the cost to the subscriber. This is particularly advantageous where the operator of network GB2 is a virtual network operator who does not own physical network infrastructure but is a service provider able to acquire an allocation of IMSI numbers from a network such as network GB1. The operator of network GB2 similarly obtains an allocation of IMSI numbers from network DE2 in order to allocate a second IMSI to each subscriber. The above allocation process can be extended to any number of cooperating network operators in any number of countries, thereby potentially extending the use of the method of updating subscriber information globally throughout the GSM system. Since conventional roaming agreements carry a high level of cost, the overall saving to the operator of network GB2 and ultimately to the subscriber can thereby be made substantial.

In this example, the contents of the table 201 could be as follows. The first row would indicate network GB2 having a preferred subscriber identifier indicated as being the first IMSI. The second row would contain the network identifier for DE2 and would indicate the preferred subscriber identifier as being the second IMSI. The third row would contain the network identifier for GB1 and indicate the preferred subscriber identifier as being the first IMSI. Finally, the fourth row of data would indicate the network identifier of DE1 and the preferred subscriber identifier being the second IMSI.

The result of this set of subscriber information 40 is that the apparatus is able to operate in both countries without incurring a roaming agreement surcharge. When for example registered with network DE1, calls made from the apparatus are treated as though the home network is DE2. Although network DE2 is required to pass accounting information to network GB2, the real home network, no roaming agreement charges are incurred.

As a further option, the data entered in the table 201 may in a single row define a single preferred subscriber identifier for use with all networks in a specified country. This may be achieved by entering in the first column a value of MCC defining the country and a predetermined character, such as a string of zeros, in the field reserved for entry of the MNC. The application may then interpret this data as applying to all networks having the indicated value of MCC. For example, in the example of Figure 19, all networks in a third country such as France may be defined as using the preferred subscriber identifier for network DE1. This will enable the subscribers of home network GB2 to make use of a roaming agreement between DE1 and networks in France without network GB2 having entered into any separate roaming agreements.

The routing of calls via preferred routes in a generalised network 12 as described above applies equally well to package switched networks in which calls are transmitted as packetised data and each packet is provided with the routing information necessary to enable the packet to reach its required destination. Such packetised routing can be configured for example to avoid specified nodes in the generalised network 12 or to always route via specific nodes such as the prepayment platform 150.

When utilising the routing information, routing digits may be added to the routing data which is output to the local network. Alternatively, the number dialled may be replaced by an entirely different number determined by the routing information, provided that the resulting connection is to the same call destination.

The above described embodiments refer to the possibility of the control centre 14 responding to request messages from apparatus 1 by providing response messages containing information for updating information stored and used by the apparatus. Embodiments are envisaged in which the updating information is provided for the routing table 13, preferred network table 19, forbidden network table 20 and subscriber information 40. Further embodiments are envisaged in which not all of these four items are updated by the use of messages from the control centre, as for example in the case where only the network tables are updated, or only the routing table is updated, or only the subscriber identifier is updated.

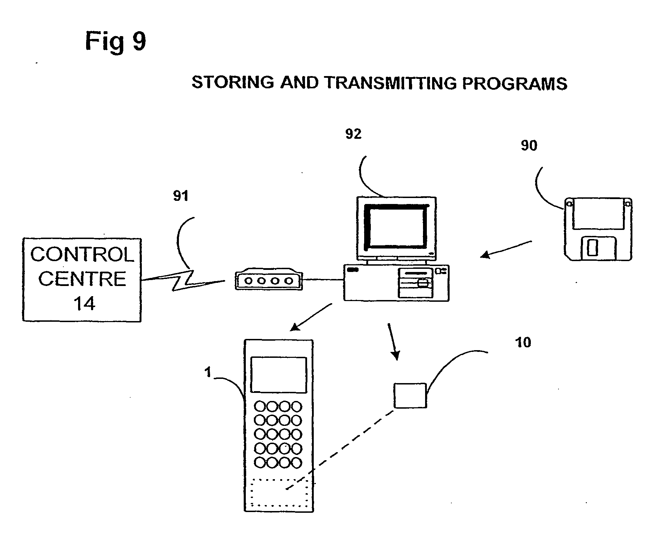

The above embodiments may be implemented using hardware in which the various processors of the system are provided with computer programs which define processor implementable instructions for carrying out the methods disclosed above. A further aspect of the present invention is therefore constituted by such programs. The programs may be stored in storage media such as a disc 90 as illustrated in Figure 9 and may be communicated as a signal 91 over a network such as the internet. Further aspects of the present invention therefore comprise a storage medium storing such programs and an electronic signal embodying such programs.

Implementation of the above embodiments generally requires that the SIM card is produced and supplied to manufacturers of mobile telecommunications apparatus such that the SIM card has an operating system and a set of data files which is customized to allow the above disclosed methods to be implemented. A further aspect of the present invention therefore comprises a SIM card having an operating system and data file system for carrying out the above disclosed methods.

Figure 9 illustrates schematically that the programs stored on disc 90 or communicated as signals 91 may be provided to the control centre 14 from an originating station 92. Similarly, the programs required for operation of the SIM card 10 may be stored in a storage medium 90 and downloaded as electronic signals. Similarly, the programs required for operation of the processor 21 of the mobile telephone 1 may be stored in a storage medium 90 or downloaded as electronic signals.

This disclosure includes all the subject matter recited in the following clauses:
1. A method of operating a mobile telecommunications apparatus (1) in a telecommunications system wherein the apparatus comprises means (109) for making telephone calls via the system, the method comprising;
   detecting (60) a number of available networks (4, 16, 17, 18);
   receiving (60) network identification information from the available networks;
   selecting one (61-63) of the available networks by comparing the network identification information with stored network information comprising at least one of a preferred network table (19) and a barred network table (20);
   registering (65) with the selected network;
   determining (71) whether the stored information requires updating, and
   outputting (72) a request message for receiving updating information for updating the stored network information if the stored information is determined to require updating.
2. A method as claimed in clause 1 wherein the determining step comprises determining (71) whether the network identification information indicates that the mobile telecommunications apparatus has moved to a country which is different from a previous country in which the apparatus was previously registered.
3. A method as claimed in clause 1, wherein the determining step determines that the stored network information needs updating if the mobile telecommunications apparatus has registered with a network which is different from a network which the apparatus was last registered.
4. A method as claimed in any of clauses 1 and 2 including the step of receiving a response message comprising the requested updating information for updating the stored routing information.
5. A method as claimed in clause 4 including the step of decrypting the received response message.
6. A method as claimed in any of clauses 4 and 5 including the step of updating the stored network information with the updating information.
7. A method as claimed in clause 6, wherein the updating information is stored in a first portion of memory to constitute the updated stored network information, and including the further step of storing a duplicate of the updating information in a second portion (144) of the memory to constitute a backup memory.
8. A method as claimed in clause 7, wherein, when accessing the stored network information, the contents of the first and second portions of memory are compared and, if different, the contents of the backup memory in the second portion of the memory are copied to the first portion of memory to constitute the updated stored network information.
9. A method as claimed in any of clauses 7 and 8, wherein the stored network information is updated by an updating application (50) which causes both first and second portions of memory to be updated and wherein other applications are prohibited from updating the second portion of memory.
10. A method as claimed in any preceding clauses wherein updating the stored information comprises storing in a cache memory (146) of the apparatus the information which is superseded by updating information.
11. A mobile telecommunications apparatus (1) for use in a telecommunications system, comprising:
   detecting means (100) for detecting a number of available networks;
   receiving means (31) for receiving network identification information from the available networks;
   selecting means for selecting one of the available networks by comparing the network identification information with stored network information comprising at least one of a preferred network table (19) and a barred network table (20); and
   registering means (100) for registering with the selected network;
   wherein the apparatus further comprises:
   determining means for determining whether the stored information requires updating, and
   output means (104) for outputting a request message for receiving updating information for updating the stored information if the stored information is determined to require updating.
12. Apparatus as claimed in clause 52 wherein the determining means is operable to determine whether the network identification information indicates that the mobile telecommunications apparatus has moved to a country which is different from a previous country in which the apparatus was previously registered.
13. Apparatus as claimed in clause 11, wherein the determining means is operable to determine that the stored network information needs updating if the apparatus has registered with a network which is different from a network with which the apparatus was last registered.
14. Apparatus as claimed in any of clauses 11 to 12 including message receiving means (105) for receiving a response message comprising the requested updating information for updating the stored information.
15. Apparatus as claimed in clause 14 including decrypting means (110) for decrypting the received response message.
16. Apparatus as claimed in any of clauses 14 and 15 including updating means (106) for updating the stored routing information with the updating information.
17. Apparatus as claimed in clause 16, wherein the updating means is operable to store the updating information in a first portion of the memory, and is further operable to store a duplicate of the updating information in a second portion (144) of the memory to constitute a backup memory.
18. Apparatus as claimed in clause 17, wherein the selecting means comprises accessing means for accessing the stored network information in the first potion of memory and means for comparing the contents of the first and second portions of memory and means for copying the contents of the backup memory in the second portion of the memory to the first portion of memory if the contents are different.
19. Apparatus, as claimed in any of clauses 17 and 18, wherein the stored information is updated by an application which causes both first and second portions of memory to be updated and wherein an operating system prohibits other applications from updating the second portion of memory.
20. Apparatus as claimed in any of clauses 11 to 19 comprising a cache memory (146) for storing the stored network information which is superseded by updating information.
21. A method of operating a mobile telecommunications apparatus (1) in a telecommunications system wherein the apparatus comprises means (109) for making outgoing telephone calls via the system, means for receiving a user generated input defining a call destination (11) and routing means (107) for selecting a preferred route to the call destination via the system for an outgoing telephone call by referring to routing information stored in the apparatus, the method comprising;
   registering with a network (4) of the system which is local to the current location of the apparatus;
   receiving (70) network identification information from the local network;
   determining (71, 77, 78) from the network identification information whether the stored routing information requires updating, and
   outputting (79, 72) a request message for receiving updating information for updating the stored routing information if the stored routing information is determined to require updating.
22. A method as claimed in clause 21 wherein the determining step comprises determining (77) whether the stored routing information can be utilised in selecting a preferred route via the local network identified by the network identification information.
23. A method as claimed in clause 21 wherein the determining step comprises determining (71) whether the network identification information indicates that the mobile telecommunications apparatus has moved to a country which is different from a previous country in which the apparatus was previously registered.
24. A method as claimed in clause 21 wherein the determining step comprises determining (78) whether stored routing information relating to routing outgoing calls via the local network is valid by referring to expiry time information indicating a time at which the validity of the routing information expires.
25. A method as claimed in clause 24, wherein the expiry information is stored in the apparatus in the form of a time at which the validity of the routing information expires and wherein the method comprises determining the current time with reference to a clock (31) and comparing the time with the expiry information.
26. A method as claimed in clause 24, wherein the determining, step comprises determining whether a predetermined number of calls has been made by the apparatus since the last update of the routing information.
27. A method as claimed in clause 24 wherein the determining step comprises counting the number of intervals of predetermined length for which the apparatus remains in operation and determining the validity of the routing information to have expired when a predetermined number of the intervals has been counted.
28. A method as claimed in clause 24, wherein the determining step comprises outputting a request message to obtain the expiry information, receiving a response message including the expiry information and determining from the expiry information whether the validity of the routing information has expired.
29. A method as claimed in clause 21 wherein the determining step comprises determining whether the network identification information indicates that the mobile telecommunications apparatus has registered with a network which is different from a network with which the apparatus was last registered.
30. A method as claimed in any of clauses 21 to 29 including the step of receiving (73, 80) a response message comprising the requested updating information for updating the stored routing information.
31. A method as claimed in clause 30 including the step of decrypting the received response message.
32. A method as claimed in any of clauses 30 and 31 including the step of updating (73, 80) the stored routing information with the updating information.
33. A method as claimed in clause 32 wherein the stored routing information comprises a routing table (13) and comprising the step of updating the routing table.
34. A method as claimed in clause 33 wherein the routing table is updated so as to include a field determining the time of expiry of the validity of the updated routing table.
35. A method as claimed in any of clauses 30 and 31 including the step of updating a preferred network table (19) which defines a list of preferred networks in order of preference for use in the registering step when selecting a network from a plurality of available networks for registration.
36. A method as claimed in any of clauses 30 and 31 comprising updating a barred network table (20) comprising a list of networks in respect of which the mobile telecommunications apparatus is barred from registration for use in the registering step when selecting a network from a plurality of available networks for registration.
37. A method as claimed in any of clauses 30 to 36 wherein the updating step comprises updating data stored in a SIM card (10) of the mobile telecommunications apparatus.
38. A method as claimed in claim 35 comprising the step of obtaining network identification information for a plurality of networks (4, 16, 17, 18) including the local network which are available for registration, comparing the network identification information for the available networks with the updated preferred network table, selecting a preferred network from the available networks and, if the selected network is not the local network, re-registering (75) with the selected network.
39. A method as claimed in clause 36 including the step of comparing (74) the network identification information for the local network with the updated barred network table, and, if the local network is one of the barred networks, de-registering from the local network.
40. A method as claimed in clause 39 including the step of registering (75) with a further one of the available networks.
41. A method as claimed in any of clauses 1 to 10 and 21 to 40 wherein the telecommunications system is a GSM system.
42. A method as claimed in clause 41 wherein the request message is output using the SMS protocol.
43. A method as claimed in clause 41, wherein the request message is output using a USSD protocol.
44. A method as claimed in clause 41, wherein the request message is output using a UMTS protocol.
45. A method as claimed in clause 41, wherein a request message is output using a TCP/IP protocol.
46. A method as claimed in claim 41, wherein the request message is output using a WAP protocol.
47. A method as claimed in any of clauses 1 to 10 and 21 to 46 wherein the apparatus comprises a mobile telephone.
48. A method as claimed in any of clauses 1 to 10 and 21 to 47 wherein the apparatus comprises a SIM card (10) having a processor (31) and wherein the determining step is performed by the processor of the SIM card.
49. A method as claimed in any of clauses 1 to 10 and 21 to 48 including the step of generating the request message to include call log information comprising accumulated data relating to use of the apparatus.
50. A method as claimed in any of clauses 21 to 40, wherein the updating information is stored in a first portion of memory, and including the further step of storing a duplicate of the information in a second portion of the memory to constitute a backup memory.
51. A method as claimed in clause 50, wherein, when accessing the stored information, the contents are of the first and second portions of memory are compared and, if different, the contents of the backup memory in the second portion of the memory are copied to the first portion of memory.
52. A method as claimed in any of clauses 50 and 51, wherein the stored information is updated by an application which causes both first and second portions of memory to be updated and wherein other applications are prohibited from updating the second portion of memory.
53. A method as claimed in clause 22, wherein, if it is determined that the stored routing information cannot be utilised in selecting a preferred route via the local network, the apparatus is disabled from making outgoing telephone calls.
54. A method as claimed in any of clauses 21 to 53 for use with a prepaid subscriber service in which the subscriber makes prepayment to acquire credit for making calls, wherein the stored routing information provides routing of calls via a prepayment platform operable to allow connection if credit remains and provides for call disconnection if credit expires.
55. A method as claimed in clause 54 including the step of outputting a validation request message to the prepaid platform and receiving a verification response therefrom before initiating the making of an outgoing call.
56. A method as claimed in any of clauses 21 to 55 wherein updating the stored information comprises storing in a cache memory the information which is superseded by updating information.
57. A mobile telecommunications apparatus (1) for use in a telecommunications system, comprising:
   registering means (100) for registering with a network (4) of the system which is a local network (4) with respect to the current location of the apparatus;
   receiving means (105) for receiving network identification information from the local network;
   storing means (13) for storing routing information;
   routing means (107) for determining a preferred route via the system for an outgoing call made by the apparatus based on a user input call number, the network identification information and the stored routing information;
   wherein the apparatus further comprises:
   determining means (103) for determining whether the stored routing information requires updating, and
   output means (104) for outputting a request message for receiving updating information for updating the stored routing information if the stored routing information is determined to require updating.
58. Apparatus as claimed in clause 57 wherein the determining means is operable to determine whether the stored routing information can be utilised in selecting a preferred route via the local network identified by the network identification information.
59. Apparatus as claimed in clause 57 wherein the determining means is operable to determine whether the network identification information indicates that the mobile telecommunications apparatus has moved to a country which is different from a previous country in which the apparatus was previously registered.
60. Apparatus as claimed in clause 57 wherein the determining means is operable to determine whether stored routing information relating to routing outgoing calls via the local network is valid by referring to expiry time information indicating a time at which the validity of the routing information expires.
61. Apparatus as claimed in clause 60, wherein the expiry information is stored in the apparatus in the form of a time at which the validity of the routing information expires and wherein the determining means is operable to determine the current time with reference to a clock and comparing the time with the expiry information.
62. Apparatus as claimed in clause 60, wherein the determining means is operable to determine whether a predetermined number of calls has been made by the apparatus since the last update of the routing information.
63. Apparatus as claimed in clause 60 wherein the determining means is operable to count the number of intervals of predetermined length for which the apparatus remains in operation and to determine the validity of the routing information to have expired when a predetermined number of the intervals has been counted.
64. Apparatus as claimed in clause 60, wherein the determining means comprises means for outputting a request message to obtain the expiry information, means for receiving a response message including the expiry information, and wherein the determining means is operable to determine from the expiry information whether the validity of the routing information has expired.
65. Apparatus as claimed in clause 57 wherein the determining means is operable to determine whether the network identification information indicates that the mobile telecommunications apparatus has registered with a network which is different from a network with which the apparatus was last registered.
66. Apparatus as claimed in any of clauses 57 to 65 including receiving means for receiving a response message comprising the requested updating information for updating the stored routing information.
67. Apparatus as claimed in clause 66 including decrypting means for decrypting the received response message.
68. Apparatus as claimed in any of clauses 66 and 67 including updating means for updating the stored routing information with the updating information.
69. Apparatus as claimed in clause 68 wherein the stored routing information comprises a routing table (13) and wherein the updating means is operable to update the routing table.
70. Apparatus as claimed in clause 69 wherein the updating means is operable to update the routing table so as to include a field determining the time of expiry of the validity of the updated routing table.
71. Apparatus as claimed in any of clauses 66 and 67 comprising a preferred network table (19) which defines a list of preferred networks in order of preference for use in the registering step when selecting a network from a plurality of available networks for registration, and wherein the updating means is operable to update the preferred network table.
72. Apparatus as claimed in any of clauses 66 and 67 comprising a barred network table (20) comprising a list of networks in respect of which the mobile telecommunications apparatus is barred from registration for use in the registering step when selecting a network from a plurality of available networks for registration, and wherein the updating means is operable to update the barred network table.
73. Apparatus as claimed in any of clauses 66 to 72 comprising a SIM card (10) storing data which is updated by the updating means.
74. Apparatus as claimed in clause 71 wherein the receiving mens is operable to obtain network identification information for a plurality of networks (4, 16, 17, 18) including the local network which are available for registration, the apparatus further comprising means for comparing the network identification information for the available networks with the updated preferred network table, selecting a preferred network from the available networks and, if the selected network is not the local network, re-registering with the selected network.
75. Apparatus as claimed in clause 72 including means for comparing the network identification information for the local network with the updated barred network table, and, if the local network is one of the barred networks, de-registering from the local network.
76. Apparatus as claimed in clause75 including means for registering with a further one of the available networks after de-registering from the local network.
77. Apparatus as claimed in any of clauses 11 to 20 and 57 to 76 wherein the telecommunications system is a GSM system.
78. Apparatus as claimed in clause 77 wherein the output means is operable to output the request message using the SMS protocol.
79. Apparatus as claimed in clause 77, wherein the output means is operable to output the request message using a USSD protocol.
80. Apparatus as claimed in clause 77, wherein the output means is operable to output the request message using a UMTS protocol.
81. Apparatus as claimed in clause 77, wherein the output means is operable to output the request message using a TCP/IP protocol.
82. Apparatus as claimed in clause 41, wherein the output means is operable to output the request message using a WAP protocol.
83. Apparatus as claimed in any of clauses 11 to 20 and 57 to 82 wherein the apparatus comprises a mobile telephone.
84. Apparatus as claimed in any of clauses 11 to 20 and 57 to 83 wherein the apparatus comprises a SIM card (10) having a processor (31) and wherein the determining means is constituted by the processor of the SIM card.
85. Apparatus as claimed in any of clauses 11 to 20 and 57 to 84 wherein the output means generates the request message to include call log information comprising accumulated data relating to use of the apparatus.
86. Apparatus as claimed in any of clauses 76 to 85 wherein the updating means is operable to store the updating information in a first portion of memory, and to store a duplicate of the information in a second portion of the memory to constitute a backup memory.
87. Apparatus as claimed in clause 86 comprising means for comparing the contents of the first and second portions of memory when and, if different, copying the contents of the backup memory to the first portion of memory.
88. Apparatus as claimed in any of clauses 86 and 87 wherein the updating means is operable to update the stored information using an application which causes both first and second portions of memory to be updated and to prohibit other applications are prohibited from updating the second portion of memory.
89. Apparatus as claimed in clause 58 comprising disabling means operable if it is determined that the stored routing information cannot be utilised in selecting a preferred route via the local network, to disable the apparatus from making outgoing telephone calls.
90. Apparatus as claimed in any of clauses 57 to 89 for use with a prepaid subscriber service in which the subscriber makes prepayment to acquire credit for making calls, wherein the stored routing information provides routing of calls via a prepayment platform operable to allow connection if credit remains and provides for call disconnection if credit expires.
91. Apparatus as claimed in clause 90 comprising means for outputting a validation request message to the prepaid platform and means for initiating the making of an outgoing call which is conditional upon receiving a verification response therefrom.
92. Apparatus as claimed in any of clauses 57 to 91 wherein the updating means comprises a cache memory for storing the information which is superseded by updating information.
93. A method of operating a mobile telecommunications apparatus (1) in a telecommunications system wherein the apparatus comprises means for making telephone calls via the system and subscriber identity data stored in a first memory (200) of the apparatus is used to associate telephone calls from the apparatus with a respective subscriber account, a set of subscriber identifiers being associated with the same account for use as the subscriber identity data, the method comprising:
   obtaining (171) a network identifier from a network with which the apparatus is registered;
   determining (172) which one of the set of subscriber identifiers is preferred for use as the subscriber identity data when the apparatus is registered to the network identified by the network identifier; and, if different from the subscriber identity data;
   replacing (175) the subscriber identity data stored in the first memory with the preferred subscriber identifier.
94. A method as claimed in clause 93 wherein the step of replacing the subscriber identity data comprises obtaining the preferred subscriber identifier by sending (183) a request message via the network and receiving (184) a response message containing the preferred subscriber identifier.
95. A method as claimed in any of clauses 93 and 94 further comprising storing in a second memory (201) a look-up table of subscriber identifiers corresponding to respective network identifiers and wherein the determining step comprises accessing (180, 181) the look-up table.
96. A method as claimed in clause 95 comprising the step of determining (181) whether an entry exists in the look-up table for the network identifier, determining whether the entry remains valid and, if not, sending (183) a request message via the network and receiving (184) a response message containing updating information for populating the table and including an entry for the network identifier.
97. A method as claimed in any of clauses 93 to 96 comprising de-registering from the network when it is determined that the subscriber identity data does not correspond to the preferred subscriber identifier for the network identifier and subsequently re-registering after the subscriber identity data stored in the first memory has been replaced by the preferred subscriber identifier.
98. A method as claimed in any of clauses 93 to 97 wherein the system comprises a GSM system and wherein the subscriber identity data is an IMSI.
99. A method as claimed in any of clauses 93 to 98 wherein the first memory comprises a data file in a SIM card of the apparatus.
100. A mobile telecommunications apparatus (1) for use in a telecommunications system wherein the apparatus comprises means (109) for making telephone calls via the system and subscriber identity data is stored in a first memory (200) of the apparatus for associating telephone calls from the apparatus with a respective subscriber account, a set of subscriber identifiers being associated with the same account for use as the subscriber identity data, the apparatus comprising:
   registering means (100) for obtaining a network identifier from a network (4) with which the apparatus is registered;
   means for determining which one of the set of subscriber identifiers is preferred for use as the subscriber identity data when the apparatus is registered to the network identified by the network identifier; and
   replacing means (106) operable, if different from the subscriber identity data, to replace the subscriber identity data stored in the first memory with the preferred subscriber identifier.
101. Apparatus as claimed in clause 100 wherein the replacing means comprises sending means (104) for sending a request message via the network and receiving means (105) for receiving a response message containing the preferred subscriber identifier.
102. Apparatus as claimed in any of clauses 100 and 101 further comprising a second memory (201) storing a look-up table of subscriber identifiers corresponding to respective network identifiers and wherein the determining means is operable to access the look-up table.
103. Apparatus as claimed in clause 102 comprising means for determining whether an entry exists in the look-up table for the network identifier, means for determining whether the entry remains valid.
104. Apparatus as claimed in any of clauses 100 to 104 comprising registering means 100 operable to de-register from the network when it is determined that the subscriber identity data does not correspond to the preferred subscriber identifier and further operable to subsequently re-register after the subscriber identity data stored in the first memory has been replaced by the preferred subscriber identifier.
105. Apparatus as claimed in any of clauses 100 to 104 wherein the system comprises a GSM system and wherein the subscriber identifier is an IMSI.
106. Apparatus as claimed in any of clauses 100 to 105 wherein the first memory comprises a data file in a SIM card (10) of the apparatus.
107. A telecommunications system for use in a method as claimed in any one of clauses 1 to 10, 21 to 56 and 93 to 99, the system comprising a plurality of networks (4, 16, 17, 18) for providing communication with mobile telecommunications apparatus; and
   a control centre (14) for receiving request messages via one of said networks from mobile telecommunication apparatus registered with said network and for generating response messages containing updated data for storage in said apparatus.
108. A control centre (14) for use in a method as claimed in any one of clauses 1 to 10, 21 to 56 and 53 to 99 comprising:
   message receiving means (115) for receiving request messages from mobile telecommunications apparatus (1);
   a response generator (121) for generating a response message;
   a transmitter (126) for transmitting the response message; and
   a database containing data for inclusion in the response message and comprising updating data for updating at least one of :
      preferred network data (122);
      forbidden network data (123);
      routing data (124); and
      preferred subscriber identifiers (129).
109. A storage medium storing processor implementable instructions for instructing a processor to control a mobile telecommunications apparatus to perform all of the steps of any one of clauses 1 to 10, 21 to 56 and 93 to 99.
110. A signal comprising processor implementable instructions for instructing a processor to control a mobile telecommunications apparatus to perform all of the steps of any one of clauses 1 to 10, 21 to 56 and 93 to 99.
111. A SIM card comprising a processor and a memory storing processor implementable instructions for operating the processor to control an apparatus to perform the steps of a method as claimed in any one of clauses 1 to 10, 21 to 56 and 93 to 99.

## Claims

1. A method of operating a mobile telecommunications apparatus (1) in a telecommunications system wherein the apparatus comprises means for making telephone calls via the system and subscriber identity data stored in a first memory (200) of the apparatus is used to associate telephone calls from the apparatus with a respective subscriber account, a set of subscriber identifiers being associated with the same account for use as the subscriber identity data, the method comprising:
obtaining (171) a network identifier from a network with which the apparatus is registered;
determining (172) which one of the set of subscriber identifiers is preferred for use as the subscriber identity data when the apparatus is registered to the network identified by the network identifier; and, if different from the subscriber identity data;
replacing (175) the subscriber identity data stored in the first memory with the preferred subscriber identifier.

2. A method as claimed in claim 1 wherein the step of replacing the subscriber identity data comprises obtaining the preferred subscriber identifier by sending (183) a request message via the network and receiving (184) a response message containing the preferred subscriber identifier.

3. A method as claimed in any of claims 1 and 2 further comprising storing in a second memory (201) a look-up table of subscriber identifiers corresponding to respective network identifiers and wherein the determining step comprises accessing (180,181) the lookup table.

4. A method as claimed in claim 3 comprising the step of determining (181) whether an entry exists in the lookup table for the network identifier, determining whether the entry remains valid and, if not, sending (183) a request message via the network and receiving (184) a response message containing updating information for populating the table and including an entry for the network identifier.

5. A method as claimed in any of claims 1 to 4 comprising de-registering from the network when it is determined that the subscriber identity data does not correspond to the preferred subscriber identifier for the network identifier and subsequently re-registering after the subscriber identity data stored in the first memory has been replaced by the preferred subscriber identifier.

6. A method as claimed in any of claims 1 to 5 wherein the system comprises a GSM system and wherein the subscriber identity data is an IMSI.

7. A mobile telecommunications apparatus (1) for use in a telecommunications system wherein the apparatus comprises means (109) for making telephone calls via the system and subscriber identity data is stored in a first memory (200) of the apparatus for associating telephone calls from the apparatus with a respective subscriber account, a set of subscriber identifiers being associated with the same account for use as the subscriber identity data, the apparatus comprising:
registering means (100) for obtaining a network identifier from a network (4) with which the apparatus is registered;
means for determining which one of the set of subscriber identifiers is preferred for use as the subscriber identity data when the apparatus is registered to the network identified by the network identifier; and
replacing means (106) operable, if different from the subscriber identity data, to replace the subscriber identity data stored in the first memory with the preferred subscriber identifier.

8. Apparatus as claimed in claim 7 wherein the replacing means comprises sending means (104) for sending a request message via the network and receiving means (105) for receiving a response message containing the preferred subscriber identifier.

9. Apparatus as claimed in any of claims 7 and 8 further comprising a second memory (201) storing:
a lookup table of subscriber identifiers corresponding to respective network identifiers and wherein the determining means is operable to access the look-up table.

10. Apparatus as claimed in claim 9 comprising means for determining whether an entry exists in the look-up table for the network identifier, means for determining whether the entry remains valid.

11. Apparatus as claimed in any of claims 7 to 10 comprising registering means 100 operable to de-register from the network when it is determined that the subscriber identity data does not correspond to the preferred subscriber identifier and further operable to subsequently re-register after the subscriber identity data stored in the first memory has been replaced by the preferred subscriber identifier.

12. Apparatus as claimed in any of claims 7 to 11 wherein the system comprises a GSM system and wherein the subscriber identifier is an IMSI.

13. A storage medium storing processor implementable instructions for instructing a processor to control a mobile telecommunications apparatus to perform all of the steps of any one of claims 1 to 6.

14. A signal comprising processor implementable instructions for instructing a processor to control a mobile telecommunications apparatus to perform all of the steps of any one of claims 1 to 6.

15. A SIM card comprising a processor and a memory storing processor implementable instructions for operating the processor to control an apparatus to perform the steps of a method as claimed in any one of claims 1 to 6.
